# EUROPÄISCHE PATENTSCHRIFT

(11) **EP 3 688 238 B1**
(45) Veröffentlichungstag und Bekanntmachung des Hinweises auf die Patenterteilung: **31.03.2021**
(21) Anmeldenummer: 19765426.2
(22) Anmeldetag: 02.09.2019
(51) Int. Cl.: E03C 1/10, F16K 1/44, F16K 15/06, E03B 7/07, E03B 9/16

(54) **RÜCKFLUSSVERHINDERER UND SYSTEMTRENNER INSBESONDERE FÜR DEN FEUERWEHRBEREICH**
NON-RETURN VALVE AND SYSTEM SEPARATOR IN PARTICULAR FOR THE FIRE-FIGHTING SECTOR
DISPOSITIF ANTI-REFLUX ET SÉPARATEUR DE SYSTÈME EN PARTICULIER POUR LE DOMAINE DE LA LUTTE CONTRE LES INCENDIES

(30) Priorität: 03.09.2018 DE 102018214948
(43) Veröffentlichungstag der Anmeldung: 05.08.2020
(73) Patentinhaber: AWG Fittings GmbH, 89177 Ballendorf (DE)
(72) Erfinder: BISKUPEK, Lars, 59302 Oelde (DE)
(74) Vertreter: Dr. Weitzel & Partner
(86) Internationale Anmeldenummer: PCT/EP2019/073328
(87) Internationale Veröffentlichungsnummer: WO 2020/048913

(56) Entgegenhaltungen:
- EP-A1- 2 592 393
- EP-A2- 1 972 839
- DE-A1- 1 550 254
- DE-A1-102017 007 458
- DE-U1-202018 102 598
- US-A- 976 010
- US-A- 1 356 298
- US-A- 1 677 357
- US-A- 5 176 171

## Beschreibung

Die vorliegende Erfindung betrifft einen Systemtrenner mit einem Rückflussverhinderer, insbesondere für den Feuerwehrbereich.

Gattungsgemäße Rückflussverhinderer werden beispielsweise in DE 20 2018 102 598 U1 und DE 20 2018 102 599 U1 offenbart. Diese sind weitgehend rohrförmig gestaltet, erstrecken sich von einem Einlass zu einem Auslass und weisen ferner für ihre Verwendung als Systemtrenner eine Vielzahl von über dem Umfang verteilt positionierten Ablassöffnungen auf, die derart mit dem Auslass verbunden sind, dass bei abgedichtetem Einlass Wasser aus dem Auslass über die Ablassöffnungen in die Umgebung abströmen kann. Um ein freies Abspritzen des abgelassenen Wassers radial nach außen zu vermeiden, ist ein Spritzschutzring vorgesehen, der die Ablassöffnungen mit Abstand radial außen überdeckt.

Die gattungsgemäßen Rückflussverhinderer weisen einen topfartigen Ventilkörper auf, der von einem Federelement in eine den Einlass abdichtende Stellung verschoben wird, wenn der eingangsseitige Druck nicht um ein vorbestimmtes Ausmaß über dem ausgangsseitigen Druck liegt. Der Ventilkörper gibt, wenn er in seine Schließstellung verschoben wird, zugleich die Ablassöffnungen im Gehäuse frei.

Nachteilig an den bekannten Rückflussverhinderern ist, dass der topfartige Ventilkörper einen Großteil des Hauptströmungskanals überdeckt und dadurch ein großer Strömungsverlust im Hauptströmungskanal erzeugt wird. Dies führt zum einen dazu, dass der Differenzdruck zwischen dem einlassseitigen Druck und dem auslassseitigen Druck, bei welchem der Rückflussverhinderer den Hauptströmungskanal öffnet, groß ist, und zum anderen, dass auch bei voll geöffnetem Rückflussverhinderer ein vergleichsweise hoher Druckabfall zwischen dem einlassseitigen Druck und dem auslassseitigen Druck auftritt und der Durchfluss reduziert ist.

Ein weiterer Nachteil der gattungsgemäßen Rückflussverhinderer ist, dass die Freigabe der Ablassöffnungen und das Verschließen des Einlasses mit ein und demselben Ventilkörper bewirkt wird, der demgemäß eine große und komplizierte Bauform aufweist.

Die Form des Ventilkörpers mit einer radialen Erweiterung und der notwendige Strömungsquerschnitt radial außerhalb des Ventilkörpers verlangen ein Gehäuse mit großem Außendurchmesser, weshalb der Rückflussverhinderer nicht mit einer Hand zu greifen ist und verhältnismäßig schwer ist. Der vorgesehene Spritzschutzring führt zu einer axialen Verlängerung des Rückflussverhinderers und trägt dadurch ebenfalls zu einem hohen Gewicht bei.

Weitere Rückflussverhinderer werden in EP 1 801 298 B1, DE 35 32 180 C1, DD 204 278 A und DE 20 2017 107 759 U1 offenbart.

EP 1 972 839 A2 offenbart ein Rückschlagventil mit einem Gehäuse, in welchem eine Trennwand mit einer Durchlassöffnung vorgesehen ist, die durch eine federnd in Schließrichtung vorgespannte und durch Strömungsdruck von der Trennwand abhebbare Ventilplatte verschließbar ist, wobei die Ventilplatte in ihrer Fläche eine weitere Öffnung ausweist, die durch eine federnd gegen die Ventilplatte vorgespannte, von der Ventilplatte durch Strömungsdruck abhebbare zweite Ventilplatte verschließbar ist. Die aus dem Dokument EP 1 972 839 A2 bekannten Merkmale sind im Oberbegriff des Anspruchs 1 zusammengefasst.

Der vorliegenden Erfindung liegt die Aufgabe zugrunde, einen Systemtrenner mit einem Rückflussverhinderer der gattungsgemäßen Art derart zu verbessern, dass ein vergleichsweise kleiner Differenzdruck zwischen dem eingangsseitigen Druck und dem ausgangsseitigen Druck ausreichend ist, um den Rückflussverhinderer zu öffnen, der Druckverlust gering ist und eine gewichtsreduzierte und kompakte Gestaltung möglich ist.

Die erfindungsgemäße Aufgabe wird durch einen Systemtrenner, umfassend einen Rückflussverhinderer, mit den Merkmalen von Anspruch 1 gelöst. In den abhängigen Ansprüchen werden besonders vorteilhafte Ausgestaltungen angegeben.

Ein erfindungsgemäßer Rückflussverhinderer, der insbesondere für den Feuerwehreinsatz geeignet ist, weist ein Gehäuse auf, das einen Hauptströmungskanal umschließt. Ferner ist ein Ventilsitz vorgesehen, der innerhalb des Gehäuses am Hauptströmungskanal positioniert ist.

Ein Ventilkörper ist relativ zum Ventilsitz beweglich, um in einer Schließstellung den Hauptströmungskanal zusammen mit dem Ventilsitz abzusperren und in einer Öffnungsstellung den Hauptströmungskanal freizugeben. In der Schließstellung liegt der Ventilkörper entsprechend abdichtend am Ventilsitz an und in der Öffnungsstellung ist der Ventilkörper entsprechend vom Ventilsitz abgehoben und begrenzt zusammen mit diesem einen Strömungsquerschnitt.

Der Ventilkörper ist durch eine Druckdifferenz im Hauptströmungskanal, insbesondere zwischen einem Einlass und Auslass desselben, und/oder durch die Kraft eines Federelementes wechselseitig zwischen seiner Schließstellung und seiner Öffnungsstellung bewegbar. Das Federelement kann beispielsweise als Druckfeder ausgeführt sein, welche den Ventilkörper elastisch in Richtung des Einlasses drückt, sodass zum Öffnen des Rückflussverhinderers, das heißt zur Freigabe des Hauptströmungskanals, zum einen die Druckdifferenz zwischen Auslass und Einlass des Hauptströmungskanals überwunden werden muss und zum anderen die Kraft des Federelementes.

Erfindungsgemäß ist der Hauptströmungskanal im Bereich des Ventilkörpers in wenigstens einen äußeren Strömungskanal und einen inneren Strömungskanal aufgeteilt und der Ventilkörper umschließt den inneren Strömungskanal. Ferner bildet der Ventilkörper wenigstens einen Ventilkörperventilsitz am inneren Strömungskanal aus, wobei dieser innere Ventilkörperventilsitz zusätzlich zu dem zuvor genannten Ventilsitz vorgesehen ist. Der Ventilkörper weist wenigstens einen primären und einen sekundären Ventilteller auf, wobei der primäre und der sekundäre Ventilteller derart angeordnet sind, dass in der Schließstellung der primäre Ventilteller am Ventilsitz am Hauptströmungskanal abdichtend anliegt und der sekundäre Ventilteller am Ventilkörperventilsitz am inneren Strömungskanal abdichtend anliegt, und in der Öffnungsstellung der primäre Ventilteller vom Ventilsitz am Hauptströmungskanal abgehoben ist und den äußeren Strömungskanal freigibt, sowie der sekundäre Ventilteller vom Ventilkörperventilsitz am inneren Strömungskanal abgehoben ist und den inneren Strömungskanal freigibt.

Durch die wenigstens zweiteilige Ausführungsform des Ventilkörpers kann daher in der Öffnungsstellung des Ventilkörpers das Medium vom Einlass parallel durch den äußeren Strömungskanal und den inneren Strömungskanal zum Auslass strömen, wodurch ein vergleichsweise großer Gesamtströmungskanal zur Verfügung steht und Druckverluste vermieden werden. Ferner erlaubt diese Gestaltung eine schlanke Ausführung des Gehäuses, das damit insbesondere mit einer Hand durch einen Feuerwehrmann greifbar ist.

Der erfindungsgemäße Rückflussverhinderer öffnet insbesondere bereits, wenn der eingangsseitige Druck 0,2 bar über dem ausgangsseitigen Druck liegt.

Ein erfindungsgemäßer Systemtrenner weist neben dem hier beschriebenen Rückflussverhinderer zusätzlich zu einem Einlass und einem Auslass, welche über den Hauptströmungskanal im geöffnetem Zustand des Rückflussverhinderers, das heißt wenn sich der Ventilkörper in seiner Öffnungsstellung befindet, strömungsleitend miteinander verbunden sind, einen Ablassauslass im Gehäuse auf, der in der Schließstellung des Ventilkörpers strömungsleitend mit dem Auslass verbunden ist und in der Öffnungsstellung des Ventilkörpers gegenüber dem Hauptströmungskanal abgedichtet ist.

Der Ventilkörper umfasst eine Ventilstange, die den primären Ventilteller trägt und auf welcher der sekundäre Ventilteller gleitend positioniert ist. Der primäre Ventilteller ist insbesondere starr an der Ventilstange angeschlossen, beispielsweise an einem stirnseitigen Ende derselben.

Gemäß eines von der Erfindung abweichenden Beispiels weist die Ventilstange einen ersten Bund auf, mit welchem sie in der Öffnungsstellung an einem ersten Anschlag im Gehäuse anschlägt, und der sekundäre Ventilteller oder eine an diesem angeschlossene auf der Ventilstange gleitende Hülse weist einen zweiten Bund auf, mit welchem der sekundäre Ventilteller beziehungsweise die Hülse in der Öffnungsstellung an einem zweiten Anschlag im Gehäuse oder an der Ventilstange anschlägt.

Gemäß einer Ausführungsform der Erfindung ist der erste Bund am primären Ventilteller vorgesehen und der primäre Ventilteller schlägt dementsprechend an einem ersten Anschlag im Gehäuse an, wenn er sich in seiner maximalen Öffnungsstellung befindet. Der Anschlag im Gehäuse kann beispielsweise durch radiale Streben oder radiale Schrauben, die über dem Umfang des Gehäuses verteilt angeordnet sind, gebildet werden. Der zweite Bund und der zweite Anschlag können insbesondere wie zuvor dargestellt ausgeführt sein.

Gemäß einer besonders vorzuziehenden Ausführungsform der Erfindung erstreckt sich das Gehäuse rohrförmig entlang einer Längsachse von einem Einlass zu einem Auslass und der Ventilkörper ist mit seinen Ventiltellern entlang der Längsachse verschiebbar und erstreckt sich insbesondere konzentrisch zu der Längsachse.

Der primäre und der sekundäre Ventilteller können eine Tellerform mit in Richtung der Längsachse vergleichsweise kleiner Erstreckung aufweisen. Der Begriff Ventilteller schließt jedoch nicht aus, dass die Erstreckung in Richtung der Längsachse auch größer ist, und sogar größer als die Erstreckung in der Radialrichtung sein kann. Bevorzugt beträgt die Erstreckung in der Radialrichtung jedoch ein Mehrfaches oder Vielfaches der Erstreckung in der Längsrichtung.

Insbesondere ist das Gehäuse am Einlass und am Auslass jeweils mit einer Feuerwehrkupplung versehen, wobei am Einlass vorteilhaft eine Feuerwehranschlusskupplung oder Druckkupplung mit einem drehbaren Knaggenteil vorgesehen ist, und vorteilhaft am Auslass eine Feuerwehrfestkupplung vorgesehen ist, beispielsweise zum Anschluss eines Feuerwehrschlauches. Mit der Feuerwehrkupplung am Einlass, insbesondere der Feuerwehranschlusskupplung/Druckkupplung, kann der Rückflussverhinderer zum Beispiel an einem Standrohr oder einem Hydranten fixiert werden. Die Feuerwehrfestkupplung ist beispielsweise mit dem Gehäuse verschraubt, insbesondere auf ein Außengewinde am Ende des Gehäuses fest aufgeschraubt. Solche Feuerwehrkupplungen sind beispielsweise als Bajonettkupplungshälfte ausgeführt und vorteilhaft als symmetrisch hermaphrodite Kupplungen.

Die Ventilstange ist in einem Lagerstern oder in einem Lagerkreuz im Hauptströmungskanal gelagert. Beispielsweise ist ein Lagerring vorgesehen, der die Ventilstange umschließt und in welchem die Ventilstange in Richtung der Längsachse verschiebbar ist, und der Lagerring wird durch Radialstreben, beispielsweise drei oder vier Radialstreben, die insbesondere einteilig mit dem Gehäuse ausgeführt sind, im Hauptströmungskanal gehalten. Jedoch ist es auch möglich, dass der Lagerring und/oder die Radialstreben ein separates Teil innerhalb des Gehäuses sind.

Gemäß der Erfindung ist in den Radialstreben ein Strömungskanal vorgesehen zur Ausbildung eines Ablassauslasses, wie nachfolgend noch im Zusammenhang mit dem Systemtrenner beschrieben wird. Ein solcher Strömungskanal kann beispielsweise durch die Ventilstange und/oder die auf der Ventilstange gleitende, am sekundären Ventilteller angeschlossene Hülse wahlweise geöffnet und geschlossen werden. Die Ventilstange beziehungsweise die Hülse dienen somit als Ventilkörper, insbesondere Ablassauslassventilkörper, zum Öffnen und Schließen des Ablassauslasses.

Bevorzugt ist eine Radialabdichtung vorgesehen, das heißt der Ventilsitz und/oder der Ventilkörperventilsitz wird/werden durch eine radial nach innen gerichtete Umfangsfläche gebildet, an welcher/welchen dann entsprechend der primäre Ventilteller beziehungsweise der sekundäre Ventilteller mit einer radial nach außen gerichteten Umfangsfläche beziehungsweise einem dort vorgesehenen Dichtring, beispielsweise O-Ring, abdichtend anliegt.

Gemäß einer Ausführungsform der vorliegenden Erfindung bildet, wie dargelegt, eine Ventilstange oder eine an einem Ventilkörper oder Ventilteller angeschlossene auf einer Stange gleitende Hülse einen Ablassauslassventilkörper aus, der den Ablassauslass, der in einer oder mehreren Radialstreben im Gehäuse vorgesehen ist, wahlweise freigeben und abdichten kann.

Der Ablassauslass ist bevorzugt in Form wenigstens einer Radialbohrung in wenigstens einer Radialstrebe, ausgeführt. Insbesondere sind über dem Umfang des Gehäuses mehrere Radialbohrungen mit Abstand zueinander positioniert. Die Form solcher Radialbohrungen ist nicht auf einen kreisrunden Querschnitt beschränkt. Beispielsweise kommt auch ein elliptischer, eckiger oder der Querschnitt eines Langloches in Betracht. Auch ist es nicht zwingend notwendig, dass die Radialbohrungen senkrecht in das Gehäuse eingebracht sind. Auch schräg eingebrachte Bohrungen kommen in Betracht.

Gemäß einer besonders bevorzugten Ausgestaltung der Erfindung wird der Ablassauslass in Radialrichtung mit Abstand durch das drehbare Knaggenteil der Feuerwehranschlusskupplung überdeckt. Damit bildet das Knaggenteil, der zum Anschluss der Feuerwehranschlusskupplung beispielsweise an ein Standrohr oder an einen Hydranten oder auch einen Schlauch oder eine Pumpe verdrehbar ist, zugleich einen Spritzschutzring, der ein weites freies radiales Abspritzen über den Ablassauslass, insbesondere die wenigstens eine Radialbohrung im Gehäuse verhindert. Dadurch, dass kein separater Spritzschutzring vorgesehen werden muss, kann die Erstreckung des Systemtrenners beziehungsweise des Gehäuses in der Längsrichtung reduziert werden und Gewicht kann eingespart werden.

Anstelle des Knaggenteils kann auch ein axialer Vorsprung am Gehäuse den wenigstens einen Ablassauslass in der Radialrichtung mit Abstand überdecken.

Mit dem erfindungsgemäßen Rückflussverhinderer beziehungsweise Systemtrenner kann beispielsweise ein Zurückfließen von verschmutztem Wasser in ein Trinkwasserleitungsnetz wirkungsvoll verhindert werden, wenn beispielsweise beim Feuerwehreinsatz beziehungsweise im Feuerlöschbereich, bei welchem der Rückflussverhinderer beziehungsweise Systemtrenner am Ausgang eines Standrohres oder Hydranten angeschlossen wird, die Gefahr besteht, dass Löschwasser vom Feuerlöschschlauch über das Standrohr oder den Hydranten zurück in das Trinkwasserleitungsnetz gelangen kann, beispielsweise über einen Unterflurhydranten, an dem das Standrohr angeschlossen ist. Die Gefahr besteht beispielsweise dann, wenn ein Feuerwehrmann versehentlich in ein Standrohr oder einen Hydranten Wasser einspeist, indem er zum Beispiel einen Schlauch, der auf einer Druckseite der Pumpe angeschlossen ist, fälschlicherweise an das Standrohr beziehungsweise den Hydranten ankuppelt. In diesem Fall wird beim Einschalten der Pumpe, wenn der Druck am Eingang des Rückflussverhinderers nicht um mindestens 0,2 bar über dem Druck am Ausgang des Rückflussverhinderers liegt, ein Rückströmen von Wasser aus dem Ausgang zu dem Eingang durch den Ventilkörper in seiner Schließstellung verhindert, und das Wasser, das über den Ausgang in den Rückflussverhinderer eingespeist wird, tritt vorteilhaft durch den Ablassauslass ins Freie und signalisiert damit, dass ein Fehler aufgetreten ist.

Sobald hingegen eingangsseitig ein Druck von ca. 0,2 bar über dem Ausgangsdruck anliegt, wird der Ablassauslass verschlossen. Erst wenn dieser vollkommen geschlossen ist und der Druck eingangsseitig weiter erhöht wird, beginnt sich bevorzugt der Ventilkörper in seine Öffnungsstellung zu bewegen, um den Hauptströmungskanal freizugeben.

Durch den wenigstens zweiteiligen Ventilkörper mit dem primären Ventilteller und dem sekundären Ventilteller, die bevorzugt axial zueinander verschiebbar sind und die gegeneinander abdichten, öffnet sich der in Strömungsrichtung gesehene erste Ventilteller, das heißt der primäre Ventilteller zunächst und nimmt den sekundären Ventilteller mit. Bei weiter ansteigendem Druck oder auch unmittelbar anschließend wird der sekundäre Ventilteller in der Strömungsrichtung vom primären Ventilteller abgehoben und gibt den inneren Strömungskanal frei. Damit kann Medium, insbesondere Wasser, zunächst vom Eingang über den äußeren Strömungskanal und anschließend zusätzlich über den inneren Strömungskanal zum Ausgang strömen.

In der Praxis können sich die beiden Ventilteller nahezu gleichzeitig öffnen, sodass kein Umschalten zu bemerken ist.

Durch die erfindungsgemäße Gestaltung kann der Gehäuseinnendurchmesser deutlich kleiner gestaltet werden, bei gleichem oder geringerem Druckverlust im Vergleich zu einem konventionellen einteiligen Ventilteller. Es ist vorstellbar, die Anzahl der Ventilteller, die gegeneinander abdichten und gemeinsam den Ventilkörper ausbilden, weiter zu erhöhen, beispielsweise auf drei, vier oder fünf. Jedoch werden hierfür viele Abdichtungen und zusätzliche Teile benötigt und die Axiallänge des Gehäuses wird größer.

Die eingangsseitige Feuerwehranschlusskupplung kann beispielsweise als Storz B-Kupplung ausgeführt sein. Deren Durchmesser ist, ebenso wie der Durchmesser der ausgangsseitigen Feuerwehrkupplung, genormt. Durch die mögliche schlanke Gestaltung des Gehäuses kann dieses einen Außendurchmesser aufweisen, der kleiner ist als der Außendurchmesser der Feuerwehrkupplungen, und zwar über der gesamten axialen Länge des Gehäuses. Damit werden größere Einschnürungen im Gehäuse und damit im Hauptströmungskanal vermieden, die den Strömungswiderstand erhöhen.

Der erfindungsgemäße Rückflussverhinderer kann einen Druckverlust von maximal 1 bar bei einem Durchsatz von 1200 Liter pro Minute oder mehr, insbesondere von 1600 Liter pro Minute oder mehr aufweisen.

Der Außendurchmesser des Gehäuses kann beispielsweise maximal 120 mm, insbesondere maximal 100 mm betragen. Ein solcher Durchmesser kann auch mit Feuerwehrhandschuhen relativ gut mit einer Hand umgriffen werden, die herkömmlichen Durchmesser von 130 bis 140 mm oder mehr jedoch nicht. Damit kann beispielsweise ein Traggriff am Gehäuse entfallen, was wiederum zu Gewichtsvorteilen führt.

Eingangsseitig kann vorteilhaft ein Sieb im Gehäuse vorgesehen sein. Dieses kann aus dem Gehäuse entnehmbar sein. Beispielsweise ist das Sieb schräg in eine ringförmige Nut innen im Gehäuse einsetzbar, in eine Ausrichtung senkrecht zur Längsachse verschwenkbar und anschließend durch Verdrehung formschlüssig im Gehäuse sicherbar. Beispielsweise wird das Sieb hierfür um 90° verdreht. Die Stege des Siebs können mit einer Breite senkrecht zur Strömungsrichtung kleiner oder gleich 1 mm ausgeführt sein, um den Druckverlust zu reduzieren. Gemäß einer Ausführungsform ist das Sieb aus einem Federstahl durch Laserschneiden hergestellt.

Bevorzugt ist das Sieb mit wenigstens einem Radialvorsprung, insbesondere zwei entgegengesetzt zueinander angeordneten Radialvorsprüngen versehen und das Gehäuse mit einer Vielzahl von Axialnuten versehen, die an der ringförmigen Nut innen im Gehäuse, vorliegend Umfangsnut genannt, angrenzen, derart, dass das Sieb mit seinem wenigstens einen Radialvorsprung durch wenigstens eine der Axialnuten in die Umfangsnut einsetzbar ist und durch Verdrehen in der Umfangsnut im Gehäuse formschlüssig verriegelbar ist. Die Axialnuten sind mit Abstand zueinander in der Umfangsrichtung innen im Gehäuse vorgesehen, wobei gemäß einer Ausführungsform mehr Axialnuten in der Umfangsrichtung hintereinander vorgesehen sind als Radialvorsprünge am Sieb vorgesehen sind. Damit können die Axialnuten, wie nachfolgend noch erläutert wird, zugleich als Innenantrieb dienen. Selbstverständlich ist dies auch möglich, wenn die Anzahl der Axialnuten der Anzahl der Radialvorsprünge entspricht.

Das Gehäuse kann in Längsrichtung mehrere hintereinander geschaltete Teile aufweisen, die gegeneinander abgedichtet sind und beispielsweise durch Gewindestifte oder ähnliches, die in radial äußere Einstiche eingreifen, gegen Auseinanderschieben gesichert sind. Damit ist das Gehäuse leicht demontierbar und wieder montierbar.

Beispielsweise trägt ein demontierbarer Eingangsabschnitt des Gehäuses die Feuerwehranschlusskupplung und insbesondere das Sieb. Ein separates Ausgangsteil des Gehäuses kann dann beispielsweise die Ventilstange mit den Ventiltellern und die Feuerwehrkupplung am Auslass tragen.

Insbesondere weist der demontierbare Eingangsabschnitt, der beispielsweise in das Ausgangsteil eingeschraubt ist, die zuvor dargestellten Axialnuten auf, über welche das Sieb in die Umfangsnut einsetzbar ist. Damit können die Axialnuten zugleich als Innenantrieb zum Verschrauben des Eingangsabschnittes im oder auf dem Ausgangsteil dienen, wobei ein entsprechendes Werkzeug mit radialen Vorsprüngen versehen ist, das in die Axialnuten eingreift.

Die Erfindung soll nachfolgend anhand von Ausführungsbeispielen und den Figuren exemplarisch beschrieben werden.

Es zeigen:
- Figur 1: einen Querschnitt durch einen Systemtrenner mit Rückflussverhinderer, jedoch ohne die erfindungsgemäße Ausführung;
- Figur 2: den Systemtrenner im drucklosen Zustand;
- Figur 3: den Systemtrenner unmittelbar vor Öffnen des primären Ventiltellers;
- Figur 4: den Systemtrenner mit geöffnetem primären Ventilteller und noch geschlossenem sekundären Ventilteller;
- Figur 5: den Systemtrenner mit geöffnetem primären und sekundären Ventilteller;
- Figur 6: ein Ausführungsbeispiel einer Schiebehülse;
- Figur 7: ein Ausführungsbeispiel eines Eingangsabschnittes des Gehäuses und eines Siebs;
- Figur 8: ein Ausführungsbeispiel für einen primären Ventilteller;
- Figur 9: ein Ausführungsbeispiel für einen sekundären Ventilteller;
- Figur 10: einen Querschnitt durch einen Systemtrenner gemäß einem weiteren Ausführungsbeispiel;
- Figur 11: den Systemtrenner aus der Figur 10 in perspektivischer Darstellung im drucklosen Zustand;
- Figur 12: den Systemtrenner aus der Figur 10 unmittelbar vor dem Öffnen des primären Ventiltellers;
- Figur 13: den Systemtrenner aus der Figur 12 in perspektivischer Darstellung;
- Figur 14: den Systemtrenner aus der Figur 10 mit geöffnetem primären Ventilteller und noch geschlossenem sekundären Ventilteller;
- Figur 15: den Systemtrenner aus der Figur 14 in perspektivischer Darstellung;
- Figur 16: den Systemtrenner aus der Figur 10 mit geöffnetem primären und sekundären Ventilteller;
- Figur 17: den Systemtrenner aus der Figur 16 in perspektivischer Darstellung;
- Figur 18: einen rohrförmigen Gehäuseteil des Systemtrenners aus der Figur 10;
- Figur 19: einen möglichen Eingangsabschnitt des Systemtrenners aus der Figur 10;
- Figur 20: eine perspektivische Ansicht des primären Ventiltellers des Systemtrenners aus der Figur 10;
- Figur 21: eine perspektivische Ansicht des sekundären Ventiltellers;
- Figur 22: einen Lagerkranz für die Ventilstange des Systemtrenners aus der Figur 10 in einer Ansicht schräg von hinten;
- Figur 23: den Lagerkranz aus der Figur 22 in einer Ansicht schräg von vorne;
- Figur 24: einen Reflektionsring, der außen auf das Gehäuse aufgebracht werden kann;
- Figur 25: den Eingangsabschnitt des Systemtrenners aus der Figur 10 mit einem eingesetzten Sieb;
- Figur 26: eine vergrößerte Darstellung des Bereichs, in welchem das Sieb im Eingangsabschnitt gehalten wird.

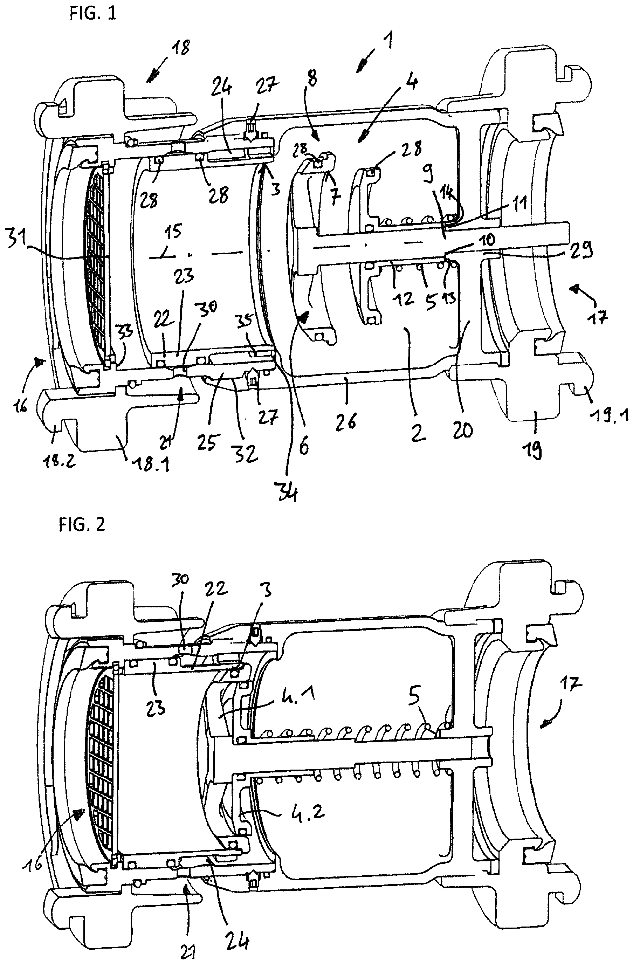

In der Figur 1 ist ein Systemtrenner, der abweichend von der vorliegenden Erfindung gestaltet ist, zum Einsatz im Feuerwehrbereich dargestellt, umfassend ein Gehäuse 1, das aus einem Eingangsabschnitt 25 und einem Ausgangsteil 26 zusammengesetzt ist. Im gezeigten Ausführungsbeispiel umfasst das Ausgangsteil 26 einen radial nach innen vorstehenden Bund, an welchem der in das Ausgangsteil 26 eingeschobene Eingangsabschnitt 25 stirnseitig in Richtung der Längsachse 15 anschlägt. Um ein Herausziehen des Eingangsabschnitts 25 aus dem Ausgangsteil 26 zu blockieren, weist der Eingangsabschnitt 25 eine radial äußere Umfangsnut, insbesondere V-Nut, auf, in welche Schrauben 27, die in das Ausgangsteil 26 eingeschraubt sind, eingreifen. Im Ausführungsbeispiel sind die Schrauben 27 als Madenschrauben mit Innenantrieb wie Innensechskant oder Innensternantrieb ausgeführt, dies ist jedoch nicht zwingend.

Abweichend von der Darstellung, könnte entsprechend auch das Ausgangsteil 26 in den Eingangsabschnitt 25 eingeschoben und in diesem befestigt sein.

Der Eingangsabschnitt 25 trägt im Bereich des Einlasses 16 eine Feuerwehranschlusskupplung 18 mit einem drehbaren Knaggenteil 18.1. Die Knaggen 18.2 stehen stirnseitig hervor.

Auf das Ausgangsteil 26 ist im Bereich des Auslasses 17 eine Feuerwehrfestkupplung 19 aufgeschraubt. Auch diese weist stirnseitig hervorstehende Knaggen 19.1 auf.

Der Einlass 16 ist über den Hauptströmungskanal 2 strömungsleitend mit dem Auslass 17 verbunden, wenn der Ventilkörper 4 sich in der Figur 1 gezeigten Öffnungsstellung befindet. In dieser Öffnungsstellung kann Medium, insbesondere Wasser, vom Einlass 16 über den inneren Strömungskanal 6 und den äußeren Strömungskanal 8 des Hauptströmungskanals 2 zum Auslass 17 strömen.

Der Ventilkörper 4 umfasst einen primären Ventilteller 4.1 und einen sekundären Ventilteller 4.2. Im gezeigten Ausführungsbeispiel besteht der Ventilkörper 4 aus diesen beiden Ventiltellern 4.1, 4.2. Dies ist jedoch nicht zwingend. Vielmehr könnten weitere Ventilteller vorgesehen sein.

Der primäre Ventilteller 4.1 dichtet gegen den Ventilsitz 3 ab, der sekundäre Ventilteller 4.2 dichtet gegen den Ventilkörperventilsitz 7 ab, jeweils in der Schließstellung des Ventilkörpers 4 beziehungsweise der jeweiligen Ventilteller 4.1, 4.2. Die Abdichtung ist eine Radialabdichtung. Jeder Ventilteller 4.1, 4.2 trägt auf einer radial äußeren Umfangsfläche einen O-Ring 28, der in eine Umfangsnut eingesetzt ist und die Abdichtung bewirkt.

Der äußere Strömungskanal 8 wird freigegeben, wenn der primäre Ventilteller 4.1 vom Ventilsitz 3 abgehoben ist, und der innere Strömungskanal 6, der vom primären Ventilteller 4.1 umschlossen wird, wird freigegeben, wenn der sekundäre Ventilteller 4.2 vom Ventilkörperventilsitz 7 abgehoben ist.

Im Gehäuse 1 ist über ein Lagerkreuz 20 eine Ventilstange 9 in Richtung der Längsachse 15 verschiebbar gelagert, die an einem stirnseitigen Ende den primären Ventilteller 4.1 trägt und auf welcher der sekundäre Ventilteller 4.2 verschiebbar gelagert ist. Hierfür weist der sekundäre Ventilteller 4.2 eine Hülse 12 auf, die die Ventilstange 9 umschließt.

Der sekundäre Ventilteller 4.2 beziehungsweise dessen Hülse 12 wird entgegen der Kraft des Federelementes 5 in die Öffnungsstellung bewegt, bis die Hülse 12 mit einem zweiten Bund 13 am zweiten Anschlag 14 anschlägt. Der primäre Ventilteller 4.1 schlägt in der Öffnungsstellung mit einem ersten Bund 10 am ersten Anschlag 11 an, wobei im gezeigten Ausführungsbeispiel der erste Anschlag 11 und der zweite Anschlag 14 von einer gemeinsamen Stirnfläche des im Lagerkreuz 20 getragenen Rings 29, der die Ventilstange 9 umschließt, gebildet werden.

Der Eingangsabschnitt 25 weist einen Ablassauslass 21 in Form einer Vielzahl von über dem Umfang verteilt angeordneten Radialbohrungen 30 auf. An einer inneren Oberfläche des Gehäuses 1, hier des Eingangsabschnitts 25, gleitet eine Schiebehülse 22, die der wahlweisen Abdichtung des Ablassauslasses 21 dient. Hierfür weist die Schiebehülse 22 einen abgedichteten Längsabschnitt 23 auf, der wahlweise über den Ablassauslass 21, hier die Radialbohrungen 30, schiebbar ist. Der abgedichtete Längsabschnitt 23 ist wiederum durch O-Ringe 28 am Gehäuse 1 beziehungsweise dem Eingangsabschnitt 25 abgedichtet.

Axial neben dem abgedichteten Längsabschnitt 23 wird durch die Schiebehülse 22 und das Gehäuse 1, hier den Eingangsabschnitt 25, ein Ablasskanal 24 begrenzt. Durch diesen kann in einer Ablassposition der Schiebehülse 22, in welcher der abgedichtete Längsabschnitt 23 den Ablasskanal 24 freigibt, Medium, insbesondere Wasser, aus dem Auslass 17 in den Ablasskanal 24 strömen.

Im Einlass 16 ist in das Gehäuse 1, hier den Eingangsabschnitt 25, ein Sieb 31 eingesetzt. Dessen Maschen sind kleiner als der Radius des inneren Strömungskanals 6 und des äußeren Strömungskanals 8, das heißt als die Erstreckung der entsprechenden Ringspalte in der Radialrichtung.

Besonders bevorzugt überdeckt, wie in den Figuren dargestellt ist, das drehbar Knaggenteil 18.1 den Ablassauslass 21, insbesondere die Radialbohrungen 30, mit Abstand in Radialrichtung und bildet damit einen Spritzschutzring. Aus dem Ablassauslass 21 ausspritzendes Medium, insbesondere Wasser, wird daher durch das drehbare Knaggenteil 18.1 umgelenkt und tritt zumindest im Wesentlichen axial aus dem Raum zwischen drehbarem Knaggenteil 18.1 und Gehäuse 1 aus.

Um einen besonders sicheren Halt zu gewährleisten, kann der Eingangsabschnitt 25 in das Ausgangsteil 26 eingeschraubt (oder aufgeschraubt) sein, siehe das Gewinde 32. Die Schrauben 27 können als Losdrehsicherung vorgesehen sein.

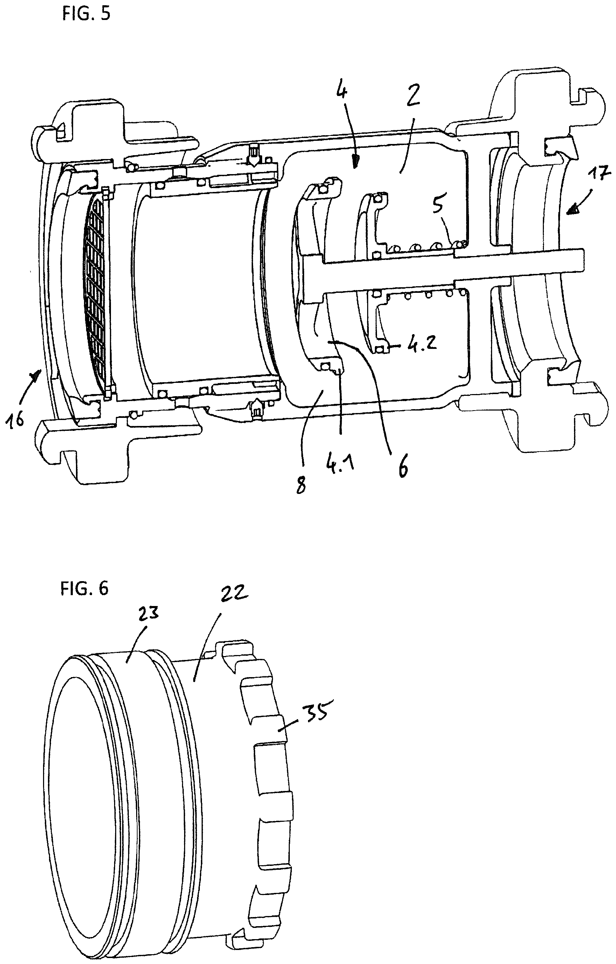

Für die Schiebehülse 22 sind im Gehäuse 1 beidseitig Anschläge vorgesehen. Im gezeigten Ausführungsbeispiel wird ein Anschlag 33 durch den Bereich des Gehäuses 1 beziehungsweise des Eingangsabschnitts 25 gebildet, der das Sieb 31 trägt, und der andere Anschlag 34 wird durch den radialen Vorsprung gebildet, an dem auch der Eingangsabschnitt 25 anschlägt. Hierfür sind Vorsprünge 35 außen auf der Schiebehülse 22 vorgesehen, die auch besonders aus der Darstellung in der Figur 6 ersichtlich sind und die an dem Anschlag 34 anschlagen. Im gezeigten Ausführungsbeispiel ist eine Vielzahl von über dem Umfang der Schiebehülse 22 mit Abstand zueinander angeordneten Vorsprüngen vorgesehen, sodass die verbleibenden Freiräume zwischen den Vorsprüngen den Ablasskanal 24 bilden oder freigeben.

In der Figur 2 ist der Systemtrenner im drucklosen Zustand gezeigt, in welchem das Federelement 5 den sekundären Ventilteller 4.2 abdichtend gegen den primären Ventilteller 4.1 und diesen abdichtend gegen den Ventilsitz 3 innen in der Schiebehülse 22 drückt und die Schiebehülse 22 über den primären Ventilteller 4.1, der zusätzlich zu der radialen Abdichtung in Axialrichtung an dieser anschlägt, in die Ablassposition drückt, in welcher der abgedichtete Längsabschnitt 23 jenseits des Ablassauslasses 21 beziehungsweise der Radialbohrungen 30 positioniert ist, betrachtet vom Auslass 17 aus. Damit kann Medium, insbesondere Wasser, aus dem Auslass 17 über den Ablasskanal 24 in den Ablassauslass 21 strömen.

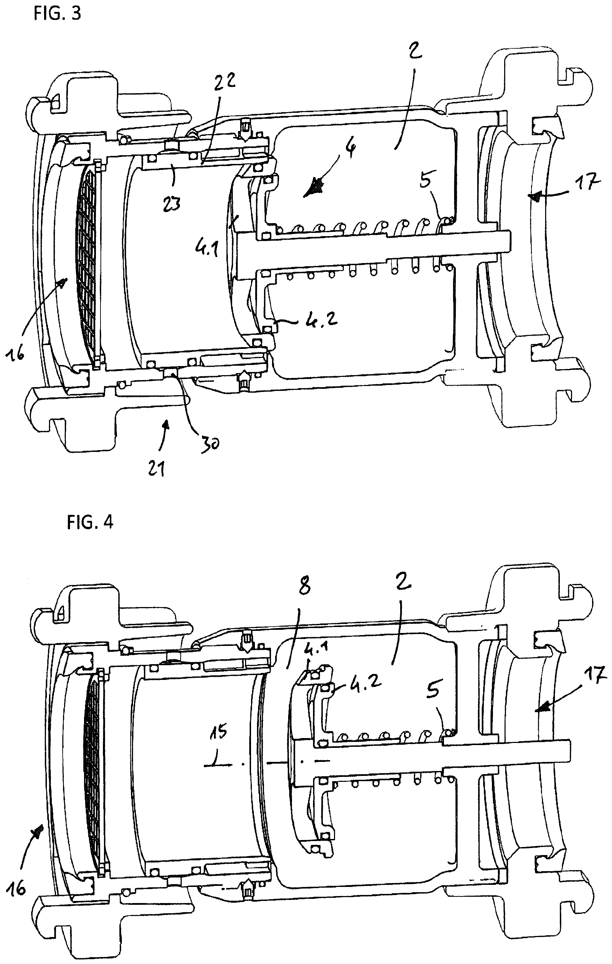

In der Figur 3 ist der Zustand gezeigt, in welchem der abgedichtete Längsabschnitt 23 aufgrund einer entsprechenden Druckdifferenz zwischen dem Einlass 16 und dem Auslass 17 entgegen der Kraft des Federelementes 5 über den Ablassauslass 21 beziehungsweise die Radialbohrungen 30 geschoben wurde, und sich der Ventilkörper 4, das heißt der primäre Ventilteller 4.1 und der sekundäre Ventilteller 4.2 jedoch noch in der Schließstellung befindet/befinden, sodass der Hauptströmungskanal 2 noch verschlossen ist. Zugleich ist der Ablassauslass 21 verschlossen.

Bei der Stellung gemäß der Figur 4 ist die Druckdifferenz zwischen dem Einlass 16 und dem Auslass 17 noch etwas größer, sodass nun auch der primäre Ventilteller 4.1 und mit diesem der sekundäre Ventilteller 4.2 entgegen der Kraft des Federelementes 5 entlang der Längsachse 15 in Richtung des Auslasses 17 verschoben wurden, sodass der Hauptströmungskanal 2 beziehungsweise dessen äußerer Strömungskanal 8 geöffnet ist.

Unmittelbar danach wird bei einem weiteren Druckanstieg die in der Figur 5 erreichte Stellung des Systemtrenners erreicht, indem zusätzlich der sekundäre Ventilteller 4.2 entgegen der Kraft des Federelementes 5 vom primären Ventilteller 4.1 abgehoben ist, sodass auch der innere Strömungskanal 6 geöffnet ist, der zuvor noch verschlossen war. Somit befindet sich der Ventilkörper 4 in seiner Öffnungsstellung und Medium, insbesondere Wasser, kann ohne großen Druckverlust vom Einlass 16 zum Auslass 17 strömen.

In der Figur 6 ist die Schiebehülse 22 dargestellt. Man erkennt den abgedichteten Längsabschnitt 23 (hier ohne die O-Ringe) und die Vorsprünge 35, die radial innen am Gehäuse 1 beziehungsweise dem Eingangsabschnitt 25 (siehe die vorherigen Figuren) gleiten und stirnseitig am Anschlag 34 (siehe die Figur 1) anschlagen, wenn sich die Schiebehülse 22 in der Abdichtposition befindet.

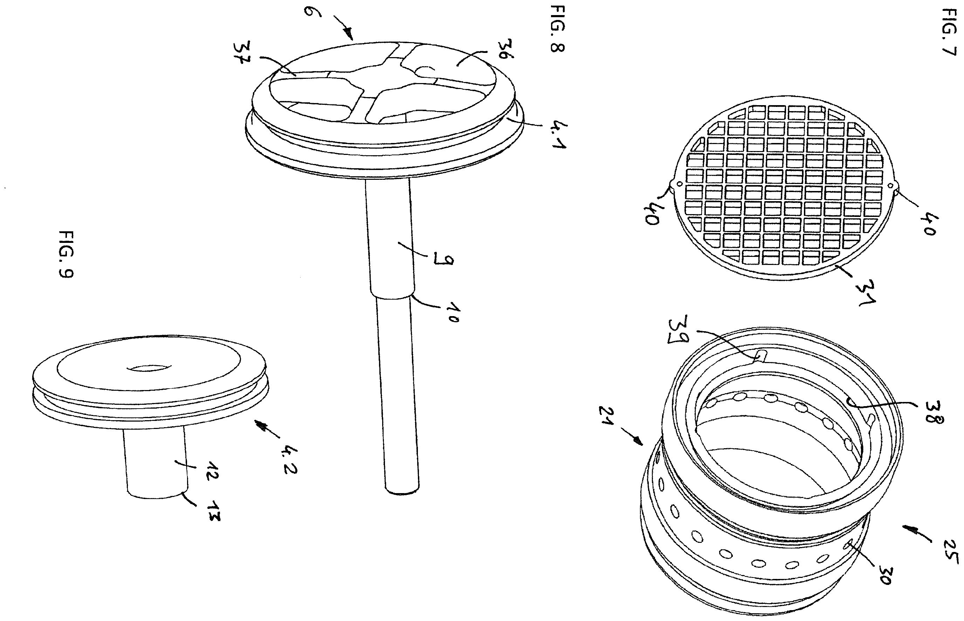

In der Figur 7 ist der Eingangsabschnitt 25 gezeigt. Man erkennt besonders die Radialbohrungen 30, die den Ablassauslass 21 bilden. Im Bereich der Mündungen der Radialbohrungen 30 radial innen im Eingangsabschnitt 25, beziehungsweise allgemein im Gehäuse 1 (siehe beispielsweise die Figur 1) kann eine Aussparung in der Oberfläche vorgesehen sein, die ein sanftes Öffnen des Ablassauslasses 21 beim Verschieben der Schiebehülse 22 ermöglicht. Insbesondere sind alle Oberflächenbereiche, entlang von welchen die Schiebehülse 22 gleitet, frei von spitzen Kanten, indem entsprechende Radien vorgesehen sind.

Im gezeigten Ausführungsbeispiel weist der Eingangsabschnitt 25 (oder allgemein ein Gehäuse 1) eine innere Umfangsnut 38 auf, in die das Sieb 31 eingesetzt werden kann. Das Sieb 31 weist wenigstens eine, hier zwei Radialvorsprünge 40 auf, die dem formschlüssigen Verriegeln des Siebs 31 im Eingangsabschnitt 25 beziehungsweise allgemein im Gehäuse 1 dienen. Damit die Radialvorsprünge 40 in die Umfangsnut 38 eingesetzt werden können, sind unmittelbar angrenzend an der Umfangsnut 38 Axialnuten 39 im Eingangsabschnitt 25, allgemein dem Gehäuse 1, vorgesehen, durch welche das Sieb 31 mit seinen Radialvorsprüngen 40 in Richtung der Längsachse 15 (siehe die Figur 1) geschoben werden kann, bis die Radialvorsprünge 40 sich innerhalb der Umfangsnut 38 befinden. Anschließend kann das Sieb 31 innerhalb der Umfangsnut 38 verdreht werden, sodass die Radialvorsprünge 40 formschlüssig gegen Herausziehen in Richtung der Längsachse 15 in der Umfangsnut 38 gehalten werden.

Die Axialnuten 39 können dabei zugleich als Innenantrieb für ein entsprechend gegengleiches Werkzeug dienen, mit welchem der Eingangsabschnitt 25 in das Ausgangsteil 26 (siehe die Figur 1) eingeschraubt oder auf dieses aufgeschraubt werden kann.

In der Figur 8 ist der primäre Ventilteller 4.1 mit der Ventilstange 9 dargestellt. Man erkennt den ersten Bund 10, mit welchem die Ventilstange 9 in der Öffnungsstellung am Gehäuse 1, hier dem Ring 29, anschlägt, siehe die Figur 1. Ferner erkennt man Öffnungen 36 in dem Ventilteller 4.1, die den inneren Strömungskanal 6 ausbilden. Im gezeigten Ausführungsbeispiel weist der primäre Ventilteller 4.1 Speichen 37 auf, zwischen denen die Öffnungen 36 in der Umfangsrichtung angeordnet sind.

In der Figur 9 ist der sekundäre Ventilteller 4.2 gezeigt, der die Hülse 12 umfasst. Die Hülse 12 weist stirnseitig den zweiten Bund 13 auf, mit welchem der sekundäre Ventilteller 4.2 beziehungsweise die Hülse 12 am zweiten Anschlag 14, siehe die Figur 1, anschlägt, wenn sich der Ventilkörper 4 beziehungsweise der sekundäre Ventilteller 4.2 in der Öffnungsstellung befindet.

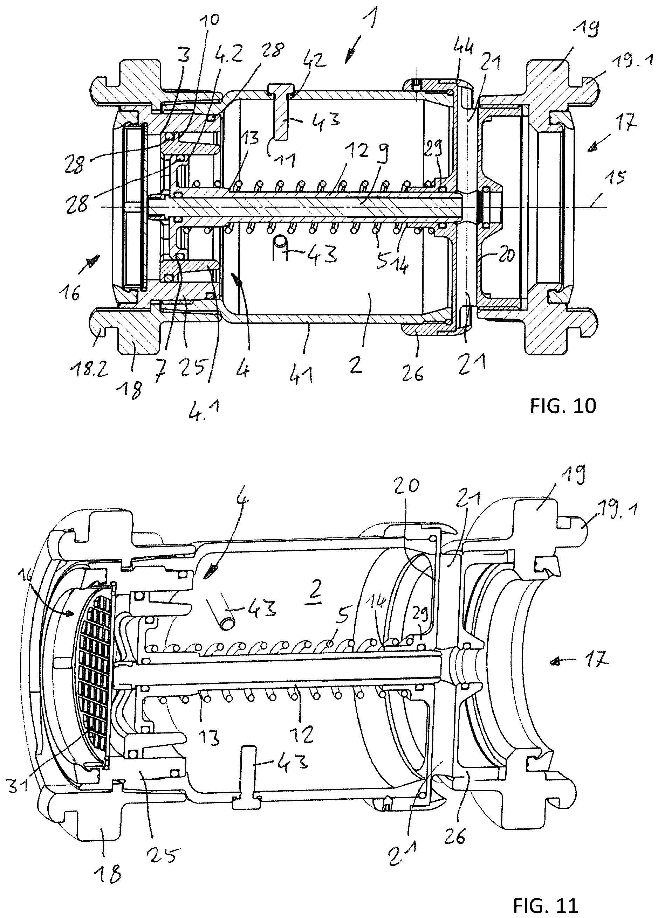

In der Figur 10 ist ein weiteres Ausführungsbeispiel eines Systemtrenners zum Einsatz im Feuerwehrbereich dargestellt. Die sich entsprechenden Bauteile sind mit den sich entsprechenden Bezugszeichen analog der Beschreibung der Figuren 1 bis 9 versehen. Im Nachfolgenden wird im Wesentlichen auf die Unterschiede zu der zuvor dargestellten Ausführungsform eingegangen.

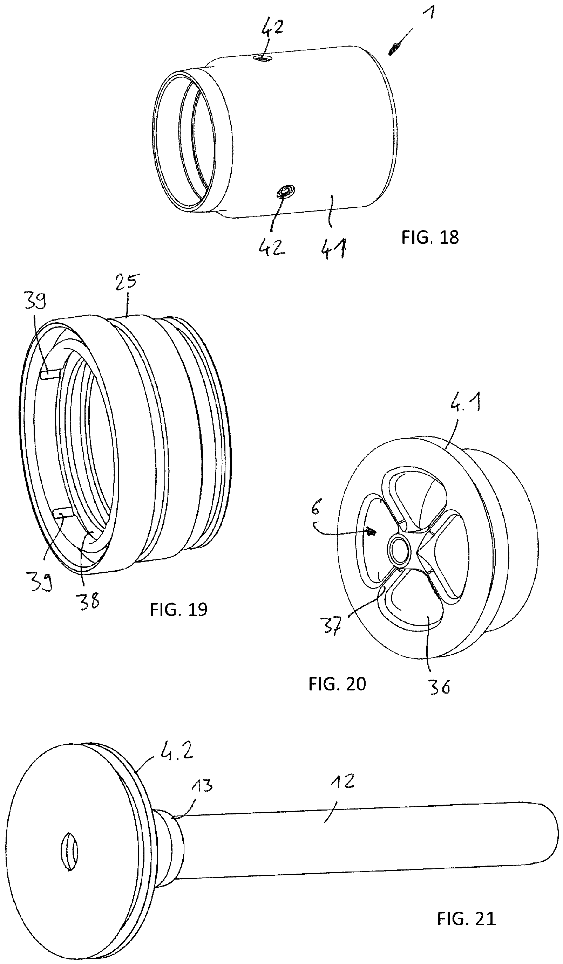

Das Gehäuse 1 umfasst wiederum einen Eingangsabschnitt 25 und ein Ausgangsteil 26. Der Eingangsabschnitt 25 und das Ausgangsteil 26 sind über ein Mittelteil 41 miteinander verbunden. Das Mittelteil ist rohrförmig und als Einzelteil in der Figur 18 dargestellt.

Im gezeigten Ausführungsbeispiel weist das Mittelteil 41 über dem Umfang verteilt angeordnete Gewindebohrungen 42 auf, in welche radial ausgerichtete Schrauben 43 eingeschraubt werden können, die, wie nachher noch erläutert wird, den ersten Anschlag 11 ausbilden.

Der Eingangsabschnitt 25 ist beispielsweise in das Mittelteil 41 eingeschraubt und trägt wiederum eine Feuerwehranschlusskupplung 18.

Auf das Ausgangsteil 26 ist wiederum im Bereich des Auslasses 17 eine Feuerwehrfestkupplung 19 aufgeschraubt.

Bei dem in den Figuren 10 und 11 gezeigten Zustand ist der Hauptströmungskanal 2 geschlossen und somit der Einlass 16 druckdicht vom Auslass 17 getrennt, weil sich der Ventilkörper 4 in seiner Schließstellung befindet. Der Ventilkörper 4 besteht wiederum aus den beiden Ventiltellern 4.1, 4.2 oder umfasst solche. Der primäre Ventilteller 4.1 dichtet gegen den Ventilsitz 3 ab, der sekundäre Ventilteller 4.2 dichtet gegen den Ventilkörperventilsitz 7 ab. Bevorzugt ist jeweils wiederum eine Radialabdichtung vorgesehen.

Im Unterschied zum zuvor dargestellten Ausführungsbeispiel ist der Ventilsitz 3 in einem ortsfesten Bauteil des Gehäuses 1 ausgeführt, nämlich in dem Eingangsabschnitt 25.

Ferner ist der erste Bund 10, der am ersten Anschlag 11 anschlägt, nicht an der Ventilstange 9 ausgebildet, sondern am primären Ventilteller 4.1.

Im gezeigten Ausführungsbeispiel ist der zweite Bund 13 wieder an einer Hülse 12 vorgesehen, die am sekundären Ventilteller 4.2 angeschlossen ist. Die Hülse 12 hat jedoch noch eine weitere Funktion, wie nachfolgend noch erläutert wird und erstreckt sich daher in Richtung der Längsachse 15 ausgehend vom sekundären Ventilteller 4.2 über den zweiten Bund 13 hinaus.

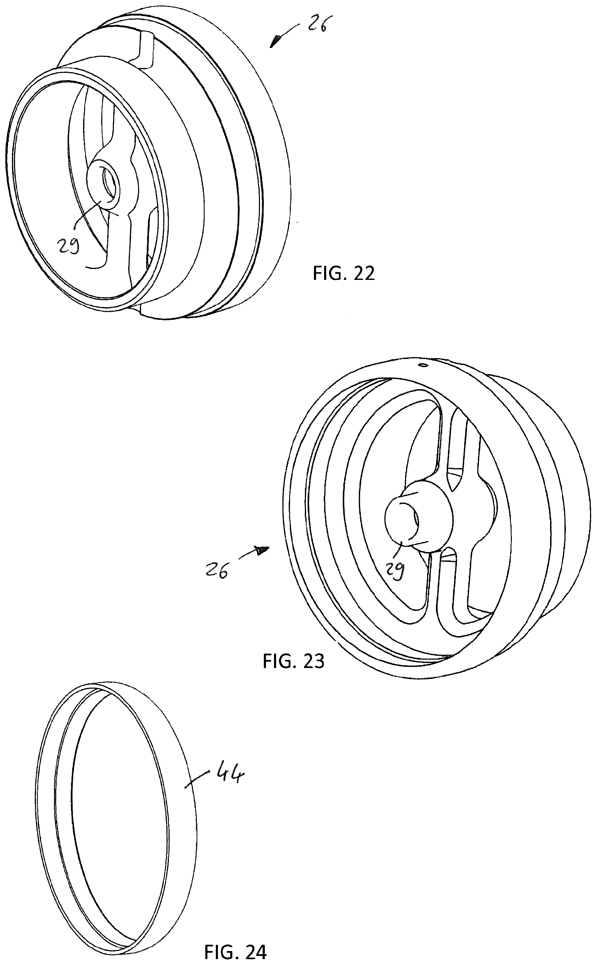

Der zweite Bund 13 schlägt wiederum am zweiten Anschlag 14 an, der durch eine Stirnfläche des im Lagerkreuz 20 getragenen Rings 29, der die Ventilstange 9 umschließt, gebildet wird. Da das Lagerkreuz 20 im gezeigten Ausführungsbeispiel nur zwei Radialstreben aufweist, die beispielsweise miteinander fluchten, siehe insbesondere die Darstellungen in den Figuren 22 und 23, könnte das Lagerkreuz auch geeigneter als Lagerkranz bezeichnet werden.

Das Lagerkreuz/der Lagerkranz 20 ist Bestandteil des Ausgangsteils 26. Ein besonderes Kennzeichen in diesem Ausführungsbeispiel ist, dass der Ablassauslass 21 in den Radialstreben des Lagerkreuzes/Lagerkranzes 20 ausgebildet ist. Die Hülse 12 dient als Ablassauslassventilkörper, um den Ablassauslass 21 wahlweise zu verschließen. Bei der Stellung, die in den Figuren 10 und 11 dargestellt ist, gibt der Ablassauslassventilkörper, das heißt die Hülse 12, den Ablassauslass 21 frei, sodass Medium aus dem Hauptströmungskanal 2 beziehungsweise aus dem Auslass 17 in den Ablassauslass 21 strömen kann.

Um ein radial weites Abspritzen des aus dem Ablassauslass 21 austretenden Mediums zu vermeiden, ist ein axialer Vorsprung am Ausgangsteil 26 vorgesehen, der den Ablassauslass 21 in Radialrichtung mit Abstand überdeckt. Im gezeigten Ausführungsbeispiel wird dieser axiale Vorsprung durch einen Reflektionsring 44 gebildet, der auf das Ausgangsteil 26 aufgeschoben ist. Die Figur 24 zeigt nochmals den Reflektionsring 44 als Einzelteil. Der Reflektionsring 44 könnte jedoch auch einteilig mit dem Ausgangsteil 26 ausgeführt sein.

Bei dem Ausführungsbeispiel gemäß den Figuren 10 und 11 ist somit die Freigabe und das Verschließen des Ablassauslasses 21 starr an die Bewegung des Ventilkörpers 4 beziehungsweise des sekundären Ventiltellers 4.2 gekoppelt, wobei sich der sekundäre Ventilteller 4.2 auch dann bewegt, wenn der primäre Ventilteller 4,1 verschoben wird, sodass die Freigabe beziehungsweise das Verschließen des Ablassauslasses 21 bevorzugt auch starr an die Bewegung des primären Ventiltellers 4.1 gekoppelt ist.

Bei der Stellung in den Figuren 10 und 11 ist, wie dargestellt, der Ablassauslass 21 geöffnet, der Systemtrenner befindet sich im Ruhezustand, ohne jeglichen Druck.

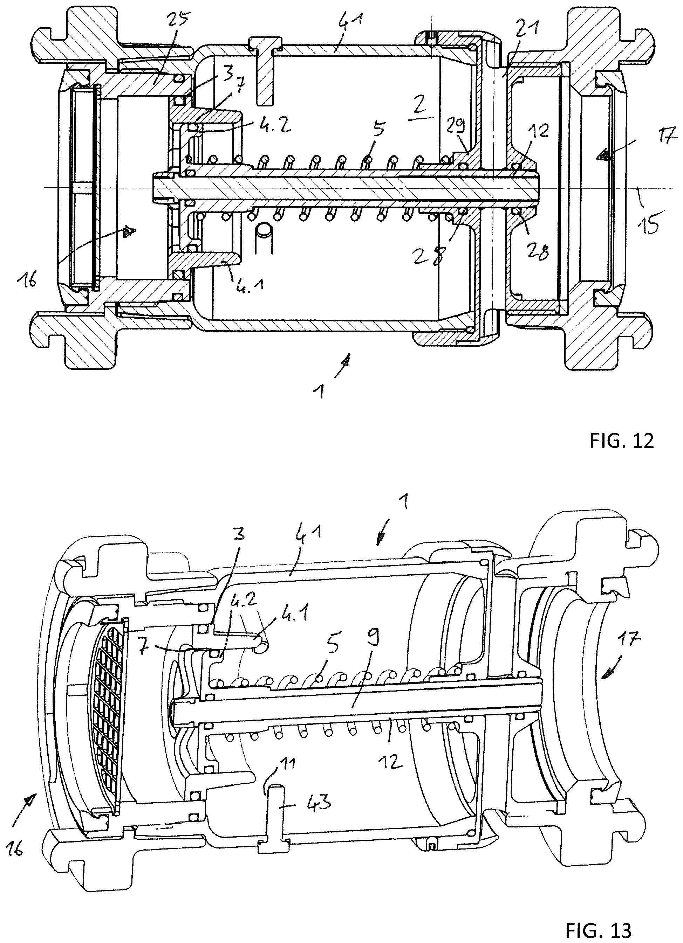

Bei dem in den Figuren 12 und 13 gezeigten Zustand ist der Ablassauslass 21 geschlossen, weil sich der primäre Ventilteller 4.1 und mit diesem der sekundäre Ventilteller 4.2 mit seiner Hülse 12 entgegen der Kraft des Federelementes 5 bewegt hat und somit die Hülse 12 abgedichtet vor die Mündung des Ablassauslasses 21 im Hauptströmungskanal 2 geschoben wurde. Im gezeigten Ausführungsbeispiel wird die Abdichtung durch axial beidseitig des Ablassauslasses 21 in den Ring 29 eingesetzte O-Ringe 28 erreicht.

Bevorzugt ist die innere Oberfläche des Ringes 29, in welcher der Ablassauslass 21 mündet, zumindest in dem Axialabschnitt entlang von welchem die Hülse 12 gleitet, frei von spitzen Kanten und insbesondere mit in Richtung der Längsachse 15 ausschließlich ebenen Flächen und/oder Radien ausgeführt.

Bevorzugt ist die Mündung des Ablaussauslasses 21 mit einem Radius im Sinne einer radialen Erweiterung des Ablassauslasses 21 versehen, um Druckstöße beim Freigeben beziehungsweise Schließen des Ablassauslasses 21 zu vermeiden.

Der sekundäre Ventilteller 4.2 liegt noch abdichtend am Ventilkörperventilsitz 7 an, der primäre Ventilteller 4.1 liegt gerade noch am Ventilsitz 3 an.

Beispielsweise herrscht bei dem in den Figuren 12 und 13 dargestellten Zustand am Einlass 16 ein Druck von ca. 0,5 bar, wohingegen der Auslass 17 drucklos ist.

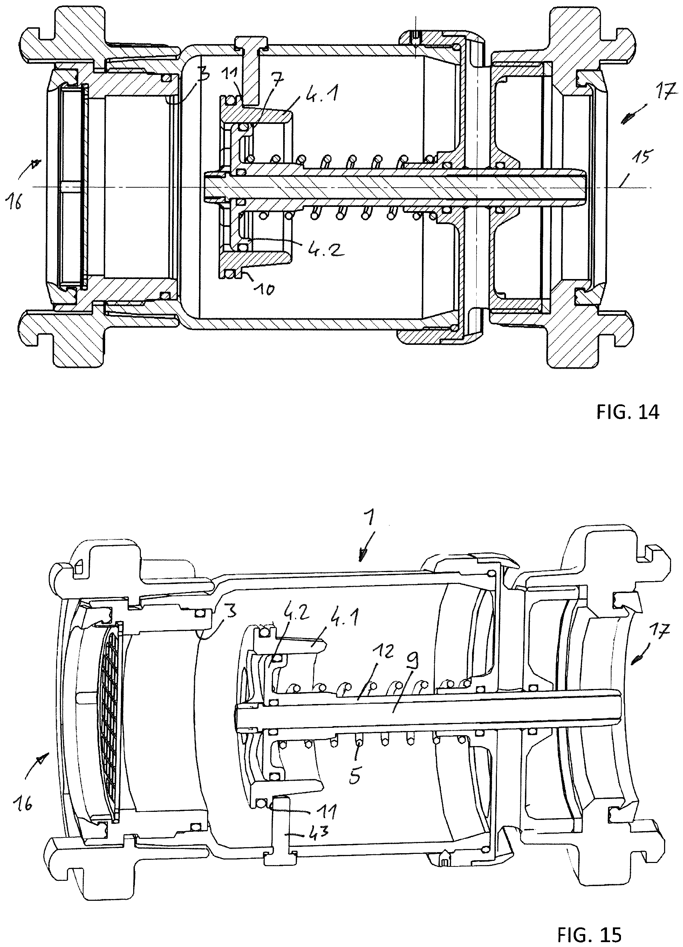

Bei dem in den Figuren 14 und 15 dargestellten Zustand ist der Druck im Einlass 16 beziehungsweise die Druckdifferenz zwischen dem Einlass 16 und dem Auslass 17 so groß, dass der primäre Ventilteller 4.1 maximal vom Ventilsitz 3 abgehoben wurde und mit seinem ersten Bund 10 am ersten Anschlag 11 anschlägt. Der sekundäre Ventilteller 4.2 sitzt hingegen immer noch abdichtend auf dem Ventilkörperventilsitz 7.

Der Ablassauslass 21 ist geschlossen.

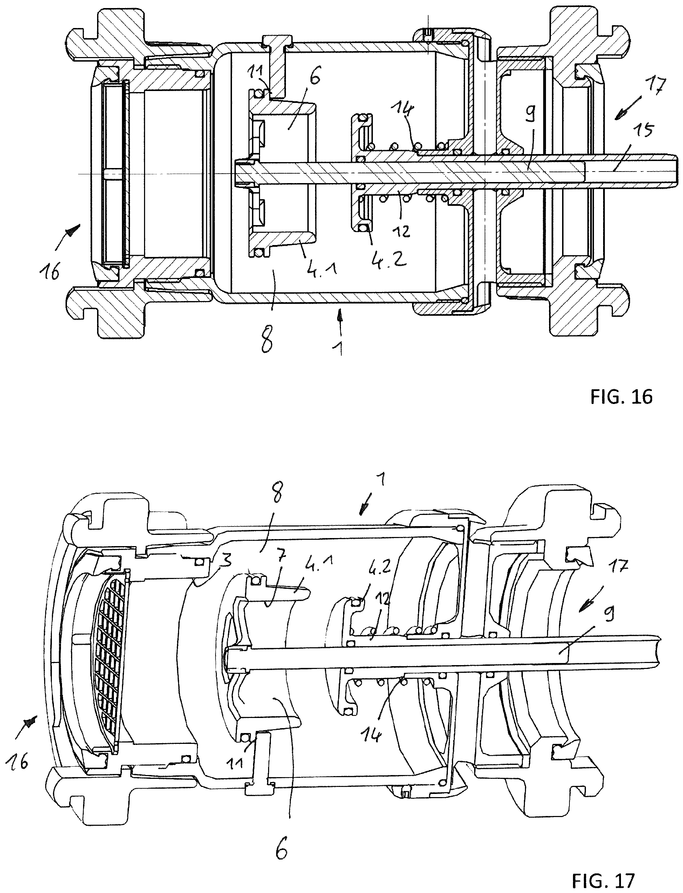

Bei dem in den Figuren 16 und 17 dargestellten Zustand ist der Systemtrenner voll geöffnet, das heißt der primäre Ventilteller 4.1 und der sekundäre Ventilteller 4.2 sind maximal von ihrem Ventilsitz 3 beziehungsweise Ventilkörperventilsitz 7 abgehoben und schlagen jeweils an dem ihnen zugeordneten Anschlag 11, 14 an. Durch den Hauptströmungskanal 2 kann der maximale Mediumdurchsatz strömen, nämlich durch den inneren Strömungskanal 6 und den äußeren Strömungskanal 8.

In der Figur 19 ist der Eingangsabschnitt 25 nochmals dargestellt. Dieser weist entsprechend der Ausgestaltung gemäß der Figur 7 eine innere Umfangsnut 38 auf, in die das Sieb 31 (siehe beispielsweise die Figur 11) eingesetzt werden kann. Entsprechend sind auch Axialnuten 39 vorgesehen.

Die Figur 20 zeigt nochmals den primären Ventilteller 4.1 mit Speichen 37 und Öffnungen 36, die den inneren Strömungskanal 6 ausbilden.

Die Figur 21 zeigt den sekundären Ventilteller 4.2 mit der Hülse 12, die einerseits den Ablassauslassventilkörper ausbildet und andererseits den zweiten Bund 13 aufweist.

Aus den Figuren 22 und 23 ist nochmals das Ausgangsteil 26 entnehmbar, mit dem Ablassauslass 21 in den Radialstreben (siehe beispielsweise die Figuren 10 und 11).

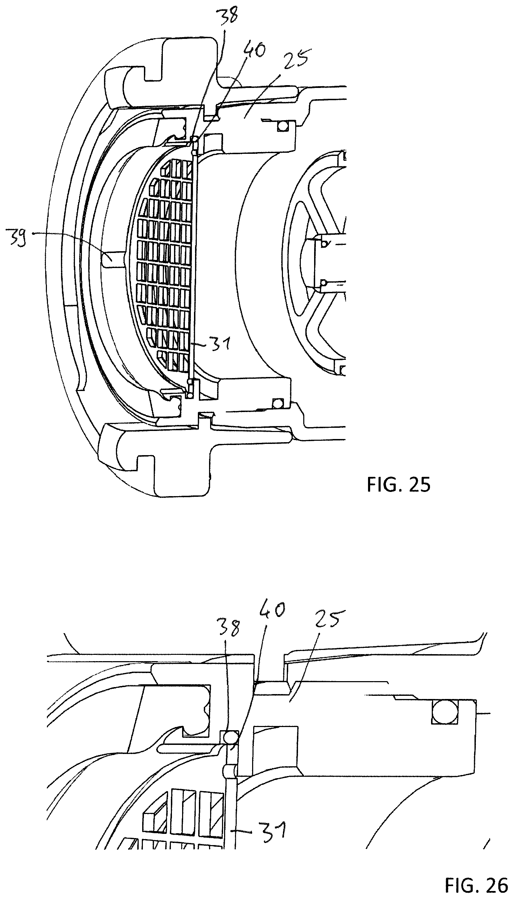

Die Figuren 25 und 26 zeigen nochmals Details, wie das Sieb 31 mit seinen Radialvorsprüngen 40 in die Umfangsnut 38 des Eingangsabschnitts 25 eingesetzt ist. Radial innerhalb der Radialvorsprünge 40 sind Markierungen, hier in Form von Bohrungen vorgesehen, die im verriegelten Zustand des Siebes 31, in dem die Radialvorsprünge 40 gegenüber den Axialnuten 39 in Umfangsrichtung versetzt sind, die Position der Radialvorsprünge 40 von außen sichtbar markieren. Diese Markierungen/Bohrungen sind auch in der Figur 7 erkennbar.

### Bezugszeichenliste

- 1: Gehäuse
- 2: Hauptströmungskanal
- 3: Ventilsitz
- 4: Ventilkörper
- 4.1: primärer Ventilteller
- 4.2: sekundärer Ventilteller
- 5: Federelement
- 6: innerer Strömungskanal
- 7: Ventilkörperventilsitz
- 8: äußerer Strömungskanal
- 9: Ventilstange
- 10: erster Bund
- 11: erster Anschlag
- 12: Hülse
- 13: zweiter Bund
- 14: zweiter Anschlag
- 15: Längsachse
- 16: Einlass
- 17: Auslass
- 18: Feuerwehranschlusskupplung
- 18.1: drehbares Knaggenteil
- 18.2: Knaggen
- 19: Feuerwehrfestkupplung
- 19.1: Knaggen
- 20: Lagerkreuz
- 21: Ablassauslass
- 22: Schiebehülse
- 23: abgedichteter Längsabschnitt
- 24: Ablasskanal
- 25: Eingangsabschnitt
- 26: Ausgangsteil
- 27: Schrauben
- 28: O-Ring
- 29: Ring
- 30: Radialbohrung
- 31: Sieb
- 32: Gewinde
- 33: Anschlag
- 34: Anschlag
- 35: Vorsprung
- 36: Öffnung
- 37: Speiche
- 38: Umfangsnut
- 39: Axialnut
- 40: Radialvorsprung
- 41: Mittelteil
- 42: Gewindebohrung
- 43: Schraube
- 44: Reflektionsring

## Patentansprüche

1. Systemtrenner, umfassend einen Rückflussverhinderer mit
1.1 einem Gehäuse (1), das einen Hauptströmungskanal 2 umschließt, wobei ein Einlass (16) und ein Auslass (17) im Gehäuse vorgesehen sind;
1.2 einem Ventilsitz (3) innerhalb des Gehäuses (1) am Hauptströmungskanal (2);
1.3 einem Ventilkörper (4) der relativ zum Ventilsitz (3) beweglich ist, um in einer Schließstellung den Hauptströmungskanal (2) zusammen mit dem Ventilsitz (3) abzusperren und in einer Öffnungsstellung den Hauptströmungskanal (2) freizugeben; wobei
1.4 der Ventilkörper (4) durch eine Druckdifferenz im Hauptströmungskanal (2) und/oder durch die Kraft eines Federelementes (5) wechselseitig zwischen seiner Schließstellung und seiner Öffnungsstellung bewegbar ist; wobei
1.5 der Hauptströmungskanal (2) im Bereich des Ventilkörpers (4) in wenigstens einen äußeren Strömungskanal (8) und einen inneren Strömungskanal (6) aufgeteilt ist und
1.6 der Ventilkörper (4) den inneren Strömungskanal (6) umschließt und wenigstens einen Ventilkörperventilsitz (7) am inneren Strömungskanal (6) ausbildet sowie wenigstens einen primären und einen sekundären Ventilteller (4.1, 4.2) umfasst, wobei der Ventilkörper (4) eine Ventilstange (9) umfasst, die den primären Ventilteller (4.1) trägt und auf welcher der sekundäre Ventilteller (4.2) gleitend positioniert ist; und
1.7 die Ventilstange (9) in einem Lagerstern oder Lagerkreuz (20) im Hauptströmungskanal (2) gelagert ist, und
1.8 die Ventilteller (4.1, 4.2) derart angeordnet sind, dass in der Schließstellung der primäre Ventilteller (4.1) am Ventilsitz (3) am Hauptströmungskanal (2) abdichtend anliegt und der sekundäre Ventilteller (4.2) am Ventilkörperventilsitz (7) am inneren Strömungskanal (6) abdichtend anliegt, und in der Öffnungsstellung der primäre Ventilteller (4.1) vom Ventilsitz (3) am Hauptströmungskanal (2) abgehoben ist und den äußeren Strömungskanal (8) freigibt und der sekundäre Ventilteller (4.2) vom Ventilkörperventilsitz (7) am inneren Strömungskanal (6) abgehoben ist und den inneren Strömungskanal (6) freigibt,
**dadurch gekennzeichnet, dass**
1.9 ein Ablassauslass (21) im Gehäuse (1) vorgesehen ist, der in der Schließstellung des Ventilkörpers (4) strömungsleitend mit dem Auslass (17) verbunden ist und in der Öffnungsstellung des Ventilkörpers (4) gegenüber dem Hauptströmungskanal (2) abgedichtet ist; wobei
1.10 der Ablassauslass (21) in einer oder mehreren Radialstreben des Lagersterns oder Lagerkreuzes (20) vorgesehen ist.

2. Systemtrenner gemäß Anspruch 1, **dadurch gekennzeichnet, dass** die Ventilstange (9) oder eine am sekundären Ventilteller (4.2) angeschlossene, auf der Ventilstange (9) gleitende Hülse (12) einen Ablassauslassventilkörper zum Verschließen des Ablassauslasses (21) ausbildet.

3. Systemtrenner gemäß Anspruch 1 oder 2, **dadurch gekennzeichnet, dass** der Ablassauslass (21) in einem Ausgangsteil (26) des Gehäuses (1) des Rückflussverhinderers vorgesehen ist.

4. Systemtrenner gemäß Anspruch 3, **dadurch gekennzeichnet, dass** das Ausgangsteil (26) über ein Mittelteil (41) an einem Eingangsabschnitt (25) des Gehäuses (1) angeschlossen ist.

5. Systemtrenner gemäß Anspruch 4, **dadurch gekennzeichnet, dass** der Eingangsabschnitt (25) den Ventilsitz (3) ausbildet.

6. Systemtrenner gemäß einem der Ansprüche 1 bis 5, **dadurch gekennzeichnet, dass** der Ablassauslass (21) in Radialrichtung mit Abstand durch einen axialen Vorsprung, insbesondere des Ausgangsteils (26), überdeckt wird.

7. Systemtrenner gemäß einem der Ansprüche 2 bis 6, **dadurch gekennzeichnet, dass** die innere Oberfläche des Gehäuses (1), insbesondere des Lagersterns oder Lagerkreuzes (20) oder eines in diesem vorgesehenen Ringes (29), der die Ventilstange (9) und/oder die Hülse (12) umschließt, in einem Abschnitt, entlang von welchem der Ablassausslassventilkörper gleitet, frei von spitzen Kanten ist und insbesondere ausschließlich mit in Richtung der Längsachse (15) ebenen Flächen und/oder Radien ausgeführt ist.

8. Systemtrenner gemäß einem der Ansprüche 1 bis 7, **dadurch gekennzeichnet, dass** im Bereich des Einlasses (16) ein den Hauptströmungskanal (2) abdeckendes Sieb (31) vorgesehen ist, das in eine radial innere Umfangsnut (38) des Gehäuses (1), insbesondere eines an einem Ausgangsteil (26) zumindest mittelbar montierten Eingangsabschnitt (25) des Gehäuses (1), eingesetzt ist und in einem Formschluss, der durch Verdrehung des Siebs (31) lösbar ist, gehalten wird.

9. Systemtrenner gemäß Anspruch 8, **dadurch gekennzeichnet, dass** angrenzend zur Umfangsnut (38) im Gehäuse (1), insbesondere im Eingangsabschnitt (25), eine Vielzahl von über dem Umfang mit Abstand zueinander angeordneten Axialnuten (39) vorgesehen ist und das Sieb wenigstens einen zur Form der Axialnuten (39) gegengleichen Radialvorsprung (40) aufweist, mit welchem es über wenigstens eine Axialnut (39) in die Umfangsnut (38) einschiebbar und durch Verdrehen in der Umfangsnut (38) verriegelbar ist.

10. Systemtrenner gemäß einem der Ansprüche 1 bis 9, **dadurch gekennzeichnet, dass** der primäre Ventilteller (4.1) einen ersten Bund (10) aufweist, mit welchem sie/er in der Öffnungsstellung an einem ersten Anschlag (11) am Gehäuse (1) anschlägt, und der sekundäre Ventilteller (4.2) oder eine an diesem angeschlossene auf der Ventilstange (9) gleitende Hülse (12) einen zweiten Bund (13) aufweist, mit welchem dieser/diese in der Öffnungsstellung an einem zweiten Anschlag (14) im Gehäuse (1) oder an der Ventilstange (9) anschlägt.

11. Systemtrenner gemäß einem der Ansprüche 1 bis 10, **dadurch gekennzeichnet, dass** das Gehäuse (1) sich rohrförmig entlang einer Längsachse (15) von dem Einlass (16) zu dem Auslass (17) erstreckt und der Ventilkörper (4) mit seinen Ventiltellern (4.1, 4.2) entlang der Längsachse (15) verschiebbar ist und sich insbesondere konzentrisch zu der Längsachse (15) erstreckt.

12. Systemtrenner gemäß Anspruch 11, **dadurch gekennzeichnet, dass** das Gehäuse (1) am Einlass (16) und am Auslass (17) mit einer Feuerwehrkupplung versehen ist, insbesondere am Einlass (16) mit einer Feuerwehranschlusskupplung (18) mit drehbarem Knaggenteil (18.1) und insbesondere am Auslass (17) mit einer Feuerwehrfestkupplung (19).

13. Systemtrenner gemäß Anspruch 12, **dadurch gekennzeichnet, dass** das Gehäuse (1) am Einlass (16) mit einer Storz-B-Kupplung ausgeführt ist und das Gehäuse (1) über seiner gesamten axialen Länge einen Außendurchmesser aufweist, der kleiner ist als der Außendurchmesser der Feuerwehrkupplungen.

14. Systemtrenner gemäß einem der Ansprüche 1 bis 13, **dadurch gekennzeichnet, dass** der Ventilsitz (3) und/oder der Ventilkörperventilsitz (7) durch eine radial nach innen gerichtete Umfangsfläche gebildet wird/werden.

## Claims

1. System separator, comprising a backflow preventer having
1.1 a housing (1) enclosing a main flow conduit (2), wherein an inlet (16) and an outlet (17) are provided in the housing;
1.2 a valve seat (3) inside the housing (1) on the main flow conduit (2);
1.3 a valve body (4) which is movable relative to the valve seat (3) in order to close off the main flow conduit (2) together with the valve seat (3) in a closed position and to release the main flow conduit (2) in an open position; wherein
1.4 the valve body (4) is alternately movable between its closed position and its open position by a pressure difference in the main flow conduit (2) and/or by the force of a spring element (5); wherein
1.5 the main flow conduit (2) is divided in the area of the valve body (4) into at least one outer flow conduit (8) and one inner flow conduit (6), and
1.6 the valve body (4) encloses the inner flow conduit (6) and forms at least one valve-body valve seat (7) on the inner flow conduit (6) and comprises at least one primary and one secondary valve disk (4.1, 4.2), wherein the valve body (4) comprises a valve rod (9) which carries the primary valve disk (4.1) and on which the secondary valve disk (4.2) is slidably positioned; and
1.7 the valve rod (9) is mounted in a star-shaped bearing support or bearing cross (20) in the main flow conduit (2), and
1.8 the valve disks (4.1, 4.2) are arranged in such a way that in the closed position the primary valve disk (4.1) is in sealing contact with the valve seat (3) on the main flow conduit (2) and the secondary valve disk (4.2) is in sealing contact with the valve-body valve seat (7) on the inner flow conduit (6), and in the open position the primary valve disk (4.1) is lifted off the valve seat (3) on the main flow conduit (2) and releases the outer flow conduit (8), and the secondary valve disk (4.2) is lifted off the valve-body valve seat (7) on the inner flow conduit (6) and releases the inner flow conduit (6),
**characterized in that**
1.9 a discharge outlet (21) is provided in the housing (1), which is connected to the outlet (17) in a flow-conducting manner in the closed position of the valve body (4) and is sealed with respect to the main flow conduit (2) in the open position of the valve body (4); wherein
1.10 the discharge outlet (21) is provided in one or more radial struts of the star-shaped bearing support or bearing cross (20).

2. System separator according to claim 1, **characterized in that** the valve rod (9) or a sleeve (12) connected to the secondary valve disk (4.2) and sliding on the valve rod (9) forms a discharge-outlet valve body for closing the discharge outlet (21).

3. System separator according to claim 1 or 2, **characterized in that** the discharge outlet (21) is provided in an outlet part (26) of the backflow preventer housing (1).

4. System separator according to claim 3, **characterized in that** the outlet part (26) is connected to an inlet section (25) of the housing (1) via a center part (41).

5. System separator according to claim 4, **characterized in that** the inlet section (25) forms the valve seat (3).

6. System separator according to one of claims 1 to 5, **characterized in that** the discharge outlet (21) is covered in the radial direction at a distance by an axial projection, in particular of the outlet part (26).

7. System separator according to one of claims 2 to 6, **characterized in that** the inner surface of the housing (1), in particular of the star-shaped bearing support or bearing cross (20) or of a ring (29) provided therein, which encloses the valve rod (9) and/or the sleeve (12), is free of pointed edges in a section along which the discharge-outlet valve body slides and is designed in particular exclusively with surfaces and/or radii which are flat in the direction of the longitudinal axis (15).

8. System separator according to one of claims 1 to 7, **characterized in that** a screen (31) covering the main flow conduit (2) is provided in the region of the inlet (16), which screen (31) is inserted into a radially inner circumferential groove (38) of the housing (1), in particular of an inlet section (25) of the housing (1) mounted at least indirectly on an outlet part (26), and is held in a form fit which can be released by rotation of the screen (31).

9. System separator according to claim 8, **characterized in that** adjacent to the circumferential groove (38) in the housing (1), in particular in the inlet section (25), a plurality of axial grooves (39) arranged at a distance from one another over the circumference is provided and the screen has at least one radial projection (40) of opposite shape to the axial grooves (39), by means of which it can be pushed into the circumferential groove (38) via at least one axial groove (39) and can be locked in the circumferential groove (38) by twisting.

10. System separator according to one of claims 1 to 9, **characterized in that** the primary valve disk (4.1) has a first collar (10) with which it abuts against a first stop (11) on the housing (1) in the open position, and the secondary valve disk (4. 2) or a sleeve (12) connected thereto and sliding on the valve rod (9) has a second collar (13) with which it abuts against a second stop (14) in the housing (1) or on the valve rod (9) in the open position.

11. System separator according to one of claims 1 to 10, **characterized in that** the housing (1) extends tubularly along a longitudinal axis (15) from an inlet (16) to an outlet (17) and the valve body (4) with its valve disks (4.1, 4.2) is displaceable along the longitudinal axis (15) and extends in particular concentrically to the longitudinal axis (15).

12. System separator according to claim 11, **characterized in that** the housing (1) is provided with a fire-fighting coupling at the inlet (16) and at the outlet (17), in particular at the inlet (16) with a fire-fighting connection coupling (18) with a rotatable lug part (18.1) and in particular at the outlet (17) with a fire-fighting fixed coupling (19).

13. System separator according to claim 12, **characterized in that** the housing (1) is designed at the inlet (16) with a Storz-B coupling and the housing (1) over its entire axial length has an outer diameter which is smaller than the outer diameter of the fire-fighting couplings.

14. System separator according to one of claims 1 to 13, **characterized in that** the valve seat (3) and/or the valve-body valve seat (7) is/are formed by a radially inwardly directed circumferential surface.

## Revendications

1. Disconnecteur comprenant un dispositif anti-retour comportant
1.1 un boîtier (1) qui entoure un canal d'écoulement principal (2), une entrée (16) et une sortie (17) étant prévues dans le boîtier ;
1.2 un siège de soupape (3) à l'intérieur du boîtier (1) sur le canal d'écoulement principal (2) ;
1.3 un corps de soupape (4) mobile par rapport au siège de soupape (3) pour fermer le canal d'écoulement principal (2) avec le siège de soupape (3) dans une position de fermeture et pour ouvrir le canal d'écoulement principal (2) dans une position d'ouverture ; dans lequel
1.4 le corps de soupape (4) est alternativement mobile entre sa position de fermeture et sa position d'ouverture par une différence de pression dans le canal d'écoulement principal (2) et/ou par la force d'un élément ressort (5) ; dans lequel
1.5 le canal d'écoulement principal (2) est divisé dans la zone du corps de soupape (4) en au moins un canal d'écoulement extérieur (8) et un canal d'écoulement intérieur (6), et
1.6 le corps de soupape (4) entoure le canal d'écoulement intérieur (6) et forme au moins un siège de soupape de corps de soupape (7) sur le canal d'écoulement intérieur (6) et comprend au moins une tête de soupape primaire et une tête de soupape secondaire (4.1, 4.2), le corps de soupape (4) comprenant une tige de soupape (9) qui porte la tête de soupape primaire (4.1) et sur laquelle la tête de soupape secondaire (4.2) est positionnée de manière coulissante ; et
1.7 la tige de soupape (9) est montée dans une étoile de support ou une croix de support (20) dans le canal d'écoulement principal (2), et
1.8 les têtes de soupape (4.1, 4.2) sont disposées de telle manière que, dans la position de fermeture, la tête de soupape primaire (4.1) est en contact étanche avec le siège de soupape (3) sur le canal d'écoulement principal (2) et la tête de soupape secondaire (4.2) est en contact étanche avec le siège de soupape de corps de soupape (7) sur le canal d'écoulement intérieur (6), et, dans la position d'ouverture, la tête de soupape primaire (4. 1) est soulevée du siège de soupape (3) sur le canal d'écoulement principal (2) et ouvre le canal d'écoulement extérieur (8), et la tête de soupape secondaire (4.2) est soulevée du siège de soupape de corps de soupape (7) sur le canal d'écoulement intérieur (6) et ouvre le canal d'écoulement intérieur (6),
**caractérisé en ce que**
1.9 une sortie de décharge (21) est prévue dans le boîtier (1), qui est reliée fluidiquement à la sortie (17) dans la position de fermeture du corps de soupape (4) et qui est étanche par rapport au canal d'écoulement principal (2) dans la position d'ouverture du corps de soupape (4) ; dans lequel
1.10 la sortie de décharge (21) est prévue dans une ou plusieurs branches radiales de l'étoile de support ou de la croix de support (20).

2. Disconnecteur selon la revendication 1, **caractérisé en ce que** la tige de soupape (9) ou un manchon (12) relié à la tête de soupape secondaire (4.2) et coulissant sur la tige de soupape (9) forme un corps de soupape de sortie de décharge pour fermer la sortie de décharge (21).

3. Disconnecteur selon la revendication 1 ou 2, **caractérisé en ce que** la sortie de décharge (21) est prévue dans une partie de sortie (26) du boîtier (1) du dispositif anti-retour.

4. Disconnecteur selon la revendication 3, **caractérisé en ce que** la partie de sortie (26) est reliée à une section d'entrée (25) du boîtier (1) par l'intermédiaire d'une partie centrale (41).

5. Disconnecteur selon la revendication 4, **caractérisé en ce que** la section d'entrée (25) forme le siège de soupape (3).

6. Disconnecteur selon l'une des revendications 1 à 5, **caractérisé en ce que** la sortie de décharge (21) est recouverte à distance dans la direction radiale par une saillie axiale, en particulier de la partie de sortie (26).

7. Disconnecteur selon l'une des revendications 2 à 6, **caractérisé en ce que** la surface intérieure du boîtier (1), en particulier de l'étoile de support ou de la croix de support (20) ou d'une bague (29) prévue dans celle-ci, qui entoure la tige de soupape (9) et/ou le manchon (12), est exempte d'arêtes vives, et en particulier exclusivement réalisée avec des surfaces planes et/ou des arrondis dans la direction de l'axe longitudinal (15), dans une section le long de laquelle le corps de soupape de sortie de décharge coulisse.

8. Disconnecteur selon l'une des revendications 1 à 7, **caractérisé en ce qu'**il est prévu, dans la zone de l'entrée (16), un tamis (31) recouvrant le canal d'écoulement principal (2), qui est inséré dans une rainure circonférentielle (38) radialement intérieure du boîtier (1), en particulier d'une section d'entrée (25) du boîtier (1) montée au moins indirectement sur une partie de sortie (26), et qui est maintenu par un ajustement de forme pouvant être libéré par rotation du tamis (31).

9. Disconnecteur selon la revendication 8, **caractérisé en ce qu'**une pluralité de rainures axiales (39) disposées à distance les unes des autres sur la circonférence sont prévues dans le boîtier (1), en particulier dans la partie d'entrée (25), au voisinage de la rainure circonférentielle (38), et le tamis présente au moins une saillie radiale (40) de forme symétrique à celle des rainures axiales (39), avec laquelle il peut être inséré dans la rainure circonférentielle (38) par l'intermédiaire d'au moins une rainure axiale (39) et être verrouillé dans la rainure circonférentielle (38) par rotation.

10. Disconnecteur selon l'une des revendications 1 à 9, **caractérisé en ce que** la tête de soupape primaire (4.1) présente un premier collet (10) avec lequel, dans la position d'ouverture, elle s'appuie contre une première butée (11) sur le boîtier (1), et la tête de soupape secondaire (4. 2) ou un manchon (12) qui y est relié et qui coulisse sur la tige de soupape (9) présente un deuxième collet (13) avec lequel, dans la position d'ouverture, elle ou il s'appuie contre une deuxième butée (14) dans le boîtier (1) ou contre la tige de soupape (9).

11. Disconnecteur selon l'une des revendications 1 à 10, **caractérisé en ce que** le boîtier (1) s'étend en forme de tube le long d'un axe longitudinal (15) de l'entrée (16) à la sortie (17) et le corps de soupape (4) avec ses têtes de soupape (4.1, 4.2) peut se déplacer le long de l'axe longitudinal (15) et s'étend en particulier de manière concentrique à l'axe longitudinal (15).

12. Disconnecteur selon la revendication 11, **caractérisé en ce que** le boîtier (1) est muni d'un raccord pompier à l'entrée (16) et à la sortie (17), en particulier d'un raccord pompier (18) avec partie à taquets rotative (18.1) à l'entrée (16) et en particulier d'un raccord pompier fixe (19) à la sortie (17).

13. Disconnecteur selon la revendication 12, **caractérisé en ce que** le boîtier (1) est réalisé avec un raccord Storz-B à l'entrée (16) et le boîtier (1) présente sur toute sa longueur axiale un diamètre extérieur qui est plus petit que le diamètre extérieur des raccords pompier.

14. Disconnecteur selon l'une des revendications 1 à 13, **caractérisé en ce que** le siège de soupape (3) et/ou le siège de soupape de corps de soupape (7) est/sont formé(s) par une surface circonférentielle dirigée radialement vers l'intérieur.
